# EUROPÄISCHE PATENTSCHRIFT

(11) **EP 3 350 077 B1**
(45) Veröffentlichungstag und Bekanntmachung des Hinweises auf die Patenterteilung: **11.12.2019**
(21) Anmeldenummer: 16770872.6
(22) Anmeldetag: 16.09.2016
(51) Int. Cl.: B64D 11/00

(54) **ÜBERKOPF-GEPÄCKFACH**
OVERHEAD LUGGAGE BIN
COMPARTIMENT SUPÉRIEURE DE BAGAGE

(30) Priorität: 18.09.2015 AT 508032015
(43) Veröffentlichungstag der Anmeldung: 25.07.2018
(73) Patentinhaber: FACC AG, 4910 Ried im Innkreis (AT)
(72) Erfinder: SCHÖRKHUBER, Jakob, 4682 Geboltskirchen (AT)
(74) Vertreter: Sonn & Partner Patentanwälte
(86) Internationale Anmeldenummer: PCT/AT2016/060061
(87) Internationale Veröffentlichungsnummer: WO 2017/045006

(56) Entgegenhaltungen:
- DE-A1- 4 130 644
- DE-A1- 4 335 151
- US-B1- 8 770 515

## Beschreibung

Die Erfindung betrifft ein Überkopf-Gepäckfach für ein Flugzeug, mit einem oberen Gepäckfachelement, mit einem unteren Gepäckfachelement, welches zwischen einer Offen- und einer Schließstellung beweglich ist, mit einer ersten Halteeinrichtung zum Halten des unteren Gepäckfachelements in dessen Schließstellung und mit einer zweiten Halteeinrichtung zum Halten des unteren Gepäckfachelements in dessen Offenstellung.

Solche Gepäckfächer sind im Stand der Technik seit langem bekannt. Diese Überkopf-Gepäckfächer verfügen vielfach über einen Rastmechanismus, mit dem das bewegliche Teil des Gepäckfaches in der Schließstellung fixiert werden kann. Um das Schließen des Gepäckfaches zu erleichtern, können Hebefedern vorgesehen sein. Die Federkraft der Hebefedern wird üblicherweise auf den unbeladenen Zustand des Gepäckfaches ausgelegt. Dadurch bleibt das Gepäckfach selbst dann in der Offenstellung, wenn das Gepäckfach nicht mit Gepäckstücken beladen wurde.

DE 4335151 A1 offenbart eine Gepäckablage mit einer Schale, wobei unterhalb der Schale eine Auslöseplatte mit einem Hebel angeordnet ist. Bei Ausübung einer Handkraft auf die Auslöseplatte wird der Hebel um einen Drehpunkt gedreht, wodurch auf die Hülle eines Bowdenzuges eine Schubbewegung übertragen wird. Bei Zuladung der Schale wird diese Schubbewegung durch eine am Betätigungsende des Zugseiles des Bowdenzuges angeordnete Feder kompensiert. Für das Hochschwenken der unbeladenen Schale liefert somit nur eine Gasfeder ein Hubmoment, welches aus der Federkraft und dem Hebelarm resultiert. Im Schließzustand ist ein Verriegelungshaken in einen Verriegelungszapfen eingerastet, welcher beim Betätigen eines Öffners ausgehakt wird.

Im Schließzustand sind Verriegelungshaken in Verriegelungszapfen eingerastet, die an der Seitenwand befestigt sind. Soll die Schale nun zum Beladen geöffnet werden, wird durch Betätigen eines Öffners mit einer nach unten gerichteten Handkraft über den Drehpunkt ein Gestänge bewegt. Dadurch wird der Verriegelungshaken aus den Verriegelungszapfen ausgehakt. Damit ist das Schloss geöffnet und die Schale wird aufgrund ihres Eigengewichts in ihre Beladungsstellung abgesenkt.

In dem geöffneten Zustand befindet sich die Schale in einer Gleichgewichtslage, die sich zwischen dem Gewicht der Schale und der Gegenkraft der Gasfeder ergibt und bleibt selbstständig in dieser Position. Bei einer höheren Zuladung hat die Vorderkante der Schale einen größeren Abstand zur gehäusefesten Waagrechten. Die erhöhte Zuladung bewirkt ein weiteres Zusammendrücken der Gasfeder. Damit ist die Endposition der Schale erreicht und eine weitere Abwärtsbewegung der Schale ist durch einen Anschlag begrenzt. Zudem wird ein Blockierhaken entriegelt, wodurch eine Unterstützungsgasfeder für den Schließvorgang freigegeben ist.

Demnach bezieht sich die DE 4335151 A1 lediglich auf eine Ausführung, bei welcher eine vom Beladungszustand abhängige Zuschaltung eines zusätzlichen Federelements (nämlich der Unterstützungsgasfeder) vorgesehen ist.

Aus der DE 4130644 A1 ist eine Gepäckablage bekannt, welche eine absenkbare Schale aufweist, wobei diese an stationären Seitenwänden über zwei Gelenkvierecke gelagert ist. Für jedes Gelenkviereck ist eine Gasfeder vorgesehen, die dem Gewicht der Schale entgegenwirkt. An der Schale ist beidseitig ein Waagesystem vorgesehen, bestehend aus einem Wägehebel, einer Feder und einem mit der Schale verbundenen Wägezapfen. Während des Beladens wird so das Gewicht der Schale erfasst und die Gasfeder über den Wägehebel so verschwenkt, dass einer Führungsrolle , über welche die Gasfeder auf das betreffende Gelenkviereck einwirkt, ein dem festgestellten Gewicht zugeordneter Angriffspunkt am jeweiligen Gelenkviereck zugewiesen wird.

Somit bezieht sich die DE 4130644 A1 ebenfalls auf einen Stand der Technik, bei dem ein bekanntes Wägesystem vorgesehen ist.

Die US 8,770,515 B1 betrifft eine Gepäckablage mit einer absenkbaren Schale und einer zuschaltbaren Gasdruckfeder, welche mittels eines Schalters zugeschalten werden kann, sobald das zugeladene Gewicht in der Schale ein voreingestelltes Minimalgewicht übersteigt.

Die DE 10222125 A1 und US 2003080247 A1 offenbaren weitere Gepäckablagen.

Darüber hinaus ist es aus der WO 03/033346 A1 bekannt, das Gepäckfach mit einer Einrichtung zum Halten des Behälters in seiner geöffneten Stellung auszustatten. Diese Einrichtung wird durch eine federnd gelagerte Kugel gebildet, die in geöffneter Stellung des Behälters in eine entsprechende Rastvertiefung eingreift. Dadurch kann der Behälter zum Beladen in seiner geöffneten Position gehalten werden und dadurch die Handhabung erleichtert werden. Bei einer solchen Ausführung könnten auch stärkere Hebefedern verwendet werden. Nachteiligerweise muss jedoch die Federkraft, welche die Kugel in die Rastvertiefung drückt, mindestens so groß sein, dass sie nicht durch die Kraft der Hebefeder überwunden wird. Dies hat zur Folge, dass eine wesentlich größere Bedienkraft zum Schließen des Gepäckfaches aufgewendet werden muss.

Demnach besteht die Aufgabe der vorliegenden Erfindung darin, die Nachteile des Standes der Technik zu beseitigen oder zumindest zu lindern. Die Erfindung setzt sich daher insbesondere zum Ziel, ein Überkopf-Gepäckfach der eingangs angeführten Art zu schaffen, welches eine stärkere Unterstützung des Schließvorgangs ermöglicht, ohne die Einleitung des Schließvorgangs zu Beginn wesentlich zu erschweren.

Diese Aufgabe wird durch ein Überkopf-Gepäckfach mit den Merkmalen von Anspruch 1 gelöst.

Erfindungsgemäß ist ein Bedienelement vorgesehen, welches über eine Kraftübertragungseinrichtung mit der zweiten Halteeinrichtung zum Halten des unteren Gepäckfachelements in dessen Offenstellung verbunden ist, wobei die zweite Halteeinrichtung mittels des Bedienelements von einer Halteposition in eine Auslöseposition überführbar ist, wobei die zweite Halteeinrichtung unabhängig von der Bewegung des unteren Gepäckfachelementes in die Auslöseposition überführbar ist.

Um den Schließvorgang einzuleiten, wird die zweite Halteeinrichtung durch Betätigung des Bedienelements von der Halteposition, d.h. einem aktiven Zustand, in die Auslöseposition, d.h. einen inaktiven Zustand, gebracht. In der Auslöseposition ist die einer Bewegung des unteren Gepäckfachelementes von der Offenstellung in Richtung der Schließstellung entgegenwirkende Haltekraft durch die zweite Halteeinrichtung geringer als in der Halteposition. Bevorzugt ist das Bedienelement an der Vorderseite des unteren Gepäckfachelements angeordnet, um die Bedienung durch einen Benutzer zu erleichtern. Die Haltekraft der zweiten Halteeinrichtung in der Halteposition ist bevorzugt dazu eingerichtet, das bewegliche untere Gepäckfachelement nicht nur im beladenen, sondern auch im unbeladenen Zustand, ohne Gepäckstücke im Aufnahmeraum des Gepäckfaches selbständig (d.h. ohne manuelle Unterstützung durch den Benutzer) in der Offenstellung zu halten. Diese Ausführung ermöglicht es, das Gepäckfach mit einer im Vergleich zum Stand der Technik stärkeren Hebefeder zur Unterstützung des Schließvorgangs auszustatten. Anders als beim Stand der Technik ist es nicht erforderlich, eine solche Hebefeder zwischen dem oberen und unteren Gepäckfachelement auf den unbeladenen Zustand des Gepäckfaches auszulegen, um auf diese Weise ein ungewolltes Schließen des Gepäckfaches im unbeladenen Zustand des unteren Gepäckfachelements zu vermeiden. Demgegenüber kann das untere Gepäckfachelement durch die zweite Halteeinrichtung gegen die Kraft der Hebefeder in der Offenstellung gehalten werden. Zur Einleitung des Schließvorgangs wird die zweite Halteeinrichtung über das Bedienelement in die Auslöseposition gebracht. Die Auslöseposition der Halteeinrichtung ist darauf ausgelegt, das Schließen des Gepäckfaches leichtgängig zu gestalten. Die Erfindung bringt gegenüber dem Stand der Technik insbesondere den Vorteil mit sich, dass die von der zweiten Halteeinrichtung in der Offenstellung ausgeübte Haltekraft zumindest nicht ausschließlich durch das manuelle Bewegen des unteren Gepäckfachelements in Richtung der Schließstellung überwunden werden muss. Zur Einleitung des Schließvorgangs ist das Bedienelement zwischen einer ersten Position und einer zweiten Position beweglich, um die zweite Halteeinrichtung mittels der Kraftübertragungseinrichtung von der Halteposition in die Auslöseposition zu bringen. Vorzugsweise ist das Bedienelement mit einer Feder so verbunden, dass das Bedienelement nach dessen Betätigung unter der Wirkung der Feder selbsttätig in die erste Position zurückkehrt. Vorteilhafterweise ist die Bewegung des Bedienelements von der ersten Position in die zweite Position von der Bewegung des unteren Gepäckfachelements verschieden. Dies bedeutet, dass die Betätigung der zweiten Halteeinrichtung anders als beim Stand der Technik nicht nur durch Hochschwenken des unteren Gepäckfachelementes erfolgt. Erfindungsgemäß kann die zweite Halteeinrichtung unabhängig von der Bewegung des unteren Gepäckfachelementes in die Auslöseposition überführt werden. Vorzugsweise ist die Haltekraft in der Auslöseposition der zweiten Halteeinrichtung zumindest um ein Mehrfaches geringer als in der Halteposition. Zum Schließen des Gepäckfaches ist es dann nur noch erforderlich, die vergleichsweise geringe Haltekraft der in der Auslöseposition angeordneten zweiten Halteeinrichtung zu überwinden. Bei dieser Ausführung kann der Schließvorgang in zwei Schritten durchgeführt werden. Zunächst wird die zweite Halteeinrichtung mittels des Bedienelements in die Auslöseposition gebracht. Danach wird das untere Gepäckfachelement unter Überwindung der vergleichsweise geringen Haltekraft in der Auslöseposition der zweiten Halteeinrichtung in Richtung der Schließstellung bewegt. Vorteilhafterweise kann daher die Freigabe der zweiten Halteeinrichtung und die Bewegung, insbesondere Verschwenkung, des unteren Gepäckfachelementes in die Schließstellung voneinander entkoppelt werden. Dadurch kann die Bedienung des Gepäckfaches wesentlich komfortabler gestaltet werden.

Gemäß einer besonders bevorzugten Ausführung ist das Bedienelement weiters zur Überführung der ersten Halteeinrichtung von einer das untere Gepäckfachelement in der Schließstellung fixierenden Haltestellung in eine das untere Gepäckfachelement freigebende Freigabestellung eingerichtet. Bei dieser Ausführung ist daher dasselbe Bedienelement für die erste Halteeinrichtung, mit welcher das untere Gepäckfachelement selbständig in der Schließstellung gehalten ist, und für die zweite Halteeinrichtung, mit welcher das untere Gepäckfachelement selbständig in der Offenstellung gehalten ist, vorgesehen. Durch das Bedienelement kann daher sowohl die erste als auch die zweite Halteeinrichtung betätigt werden. Zu diesem Zweck ist die Kraftübertragungseinrichtung mit der ersten und mit der zweiten Halteeinrichtung verbunden. Diese Ausführung hat den Vorteil, dass die Bedienung des Gepäckfaches besonders einfach und intuitiv ist. Weiters kann eine konstruktiv einfache Bauweise vorgesehen sein, welche sich durch geringe Kosten und Gewichtseinsparungen auszeichnet.

Zur Betätigung der ersten bzw. zweiten Halteeinrichtung ist es günstig, wenn als Bedienelement ein Griffelement, insbesondere ein Schwenkgriff, vorgesehen ist, der über die Kraftübertragungseinrichtung mit der zweiten Halteeinrichtung verbunden ist. Je nach Ausführung kann das Griffelement zwischen dem inaktiven und aktiven Zustand verschoben oder verschwenkt werden, um die zweite Halteeinrichtung, insbesondere auch die erste Halteeinrichtung, zu betätigen. Vorzugsweise ist das Griffelement an der Vorderseite des unteren Gepäckfachelements angeordnet.

Um die zweite Halteeinrichtung mit konstruktiv einfachen Mitteln von der Halteposition in die Auslöseposition zu bringen, ist es günstig, wenn die Kraftübertragungseinrichtung eine mit dem Schwenkgriff verbundene Drehwelle und/oder ein mit der zweiten Halteeinrichtung verbundenes Linearelement, insbesondere eine Schubstange, aufweist. Die Schwenkbewegung des Schwenkgriffs wird auf die damit drehfest verbundene Drehwelle übertragen, deren Drehbewegung in eine Verschiebung des Linearelements umgewandelt wird, mit welcher die zweite Halteeinrichtung von der Halteposition in die Auslöseposition überführt wird. Bevorzugt erstreckt sich die Drehwelle in Längsrichtung des unteren Gepäckfachelements, wobei das Linearelement vorzugsweise entlang der Seitenwand des unteren Gepäckfachelements angeordnet ist. Bei dieser Ausführung sind Drehwelle und Linearelement vorzugsweise im Wesentlichen im rechten Winkel zueinander angeordnet.

Zur Umsetzung der Drehbewegung der Drehwelle in eine Verschiebung des Linearelements ist es günstig, wenn die Kraftübertragungseinrichtung einen mit der Drehwelle verbundenen Betätigungshebel aufweist, wobei der Betätigungshebel, insbesondere ab einem Schwenkwinkel von mehr als 5°, vorzugsweise mehr als 10°, in einer Anschlagstellung an dem Linearelement angeordnet ist. Besonders bevorzugt ist hierbei, wenn die Verschiebung des Linearelements erst ab Erreichen eines vorgegebenen Schwenkwinkels des Betätigungshebels bewerkstelligt wird. Der Schwenkwinkel des Betätigungshebels korrespondiert zu einem Schwenkwinkel des Schwenkgriffs. Somit wird die zweite Halteeinrichtung erst dann betätigt, wenn der Schwenkwinkel um einen bestimmten Winkel verschwenkt wurde. Diese Ausführung hat insbesondere den Vorteil, dass die erste Halteeinrichtung für die Schließstellung des Gepäckfaches je nach Anwendung unabhängig von der zweiten Halteeinrichtung betätigt werden kann. Weiters kann die Bedienkraft minimiert werden. Schließlich wird die Bedienung besonders ergonomisch gestaltet.

Gemäß einer bevorzugten Ausführung weist die zweite Halteeinrichtung ein Anschlagelement, insbesondere einen Schlagstift, und eine Hakeneinrichtung auf, wobei das Anschlagelement in der Offenstellung des unteren Gepäckfachelements mit der Hakeneinrichtung verrastet ist. Dadurch kann eine sichere Verrastung in der Offenstellung des Gepäckfaches erzielt werden.

Die erste Halteeinrichtung kann eine weitere Hakeneinrichtung aufweisen, welche mit einem weiteren Anschlagelement, insbesondere einem weiteren Schlagstift, zusammenwirkt. In der Schließstellung ist die weitere Hakeneinrichtung mit dem weiteren Anschlagelement verrastet.

Zur Erzielung einer platzsparenden Ausführung ist es günstig, wenn das Anschlagelement an einem Seitenpaneel des oberen Gepäckfachelements und die Hakeneinrichtung an einer Seitenwand des unteren Gepäckfachelements angeordnet ist. Alternativ ist das Anschlagelement an der Seitenwand des unteren Gepäckfachelements und die Hakeneinrichtung an dem Seitenpaneel des oberen Gepäckfachelements angeordnet.

Zur Verrastung des unteren Gepäckfachelements in der Offenstellung ist es vorteilhaft, wenn die Hakeneinrichtung ein erstes Hakenelement und eine erste Feder aufweist, wobei das erste Hakenelement mittels der Kraftübertragungseinrichtung gegen eine erste Federkraft der ersten Feder von einer mit dem Anschlagelement verrasteten Rastposition in eine das Anschlagelement freigebende Freigabeposition beweglich, insbesondere verschwenkbar, ist. Demnach ist das erste Hakenelement mittels der ersten Feder in Richtung der Rastposition vorgespannt.

Um die zweite Halteeinrichtung für die Einleitung des Schließvorgangs in der Auslöseposition anzuordnen, ist es günstig, wenn die Hakeneinrichtung ein zweites Hakenelement aufweist, welches in der Rastposition des ersten Hakenelements in einer das Anschlagelement freigebenden inaktiven Stellung und in der Freigabeposition des ersten Hakenelements in einer mit dem Anschlagelement verrasteten aktiven Stellung angeordnet ist. Demnach ist das zweite Hakenelement in der inaktiven Stellung angeordnet, wenn das erste Hakenelement in der Rastposition vorliegt. Entsprechend liegt das zweite Hakenelement in der aktiven Stellung vor, wenn das erste Hakenelement in der Freigabeposition angeordnet ist.

In der Offenstellung des Gepäckfaches wird das Bedienelement betätigt, um das erste Hakenelement in die Freigabeposition und das zweite Hakenelement in die aktive Stellung zu bringen. In der aktiven Stellung übt das zweite Hakenelement eine zweite Haltekraft auf das Anschlagelement aus, welche vorzugsweise geringer als eine vom ersten Hakenelement in der Rastposition auf das Anschlagelement ausgeübte erste Haltekraft ist. Somit ist das erste Hakenelement auf eine sichere Verrastung des unteren Gepäckfachelements in der Offenstellung und das zweite Hakenelement auf eine leichtgängige Einleitung des Schließvorgangs ausgelegt. Vorteilhafterweise ist daher lediglich die vergleichsweise geringe zweite Haltekraft aufgrund des zweiten Hakenelements zu überwinden, wenn das untere Gepäckfachelement von der Offen- in die Schließstellung gebracht werden soll.

Um den Wechsel zwischen der inaktiven und aktiven Stellung des zweiten Hakenelements zu ermöglichen, ist es günstig, wenn das zweite Hakenelement mit einer zweiten Feder verbunden ist, wobei das zweite Hakenelement durch eine zweite Federkraft der zweiten Feder in Richtung der aktiven Stellung vorgespannt ist.

Bevorzugt weist das erste Hakenelement ein erstes Blockierelement auf, mit welchem das zweite Hakenelement in der Rastposition des ersten Hakenelements in der inaktiven Stellung gehalten ist.

Entsprechend ist es vorteilhaft, wenn das zweite Hakenelement ein zweites Blockierelement aufweist, mit welchem das erste Hakenelement in der aktiven Stellung des zweiten Hakenelements in der Freigabeposition gehalten ist. Dadurch ist sichergestellt, dass das erste und zweite Hakenelement nicht gleichzeitig im Eingriff mit dem Anschlagelement stehen.

Als erstes Blockierelement des ersten Hakenelements ist vorzugsweise ein mit der Kraftübertragungseinrichtung verbundener Führungsstift vorgesehen, welcher zwischen der Rastposition und der Freigabeposition in einer Langlochführung der Hakeneinrichtung verschieblich ist.

Als zweites Blockierelement des zweiten Hakenelements ist vorzugsweise eine Haltenase vorgesehen, welche in der Freigabeposition des ersten Hakenelements mit dem ersten Blockierelement des ersten Hakenelements in Eingriff steht.

Um die Auslöseposition der zweiten Halteeinrichtung für eine geringe Bedienkraft auszulegen, ist es günstig, wenn das erste Hakenelement eine erste Auflauffläche und das zweite Hakenelement eine zweite Auflauffläche für das Anschlagelement in der Offenstellung des unteren Gepäckfachelementes aufweist, wobei die zweite Auflauffläche einen flacheren Auflaufwinkel als die erste Auflauffläche aufweist. Auf diese Weise bewirkt die zweite Halteeinrichtung in der Auslöseposition eine geringere Haltekraft als in der Halteposition, wobei die Haltekraft aufgrund der zweiten Halteeinrichtung einer Bewegung des unteren Gepäckfachelementes von der Offenstellung in die Schließstellung entgegenwirkt. Indem die zweite Auflauffläche vergleichsweise flach ausgeführt ist, ist für die Entrastung des Anschlagelements in der Auslöseposition der zweiten Halteeinrichtung zu Beginn des Schließvorgangs lediglich eine geringe Bedienkraft erforderlich, welche durch das Anheben des unteren Gepäckfachelements bereitgestellt werden kann.

Vorzugsweise weist das erste Hakenelement und/oder das zweite Hakenelement eine weitere Auflauffläche für das Anschlagelement bei der Bewegung des unteren Gepäckfachelementes in die Offenstellung auf. Um das Erreichen der Offenstellung mit möglichst geringem Kraftaufwand zu ermöglichen, weist die weitere Auflauffläche einen flacheren Auflaufwinkel als die erste Auflauffläche des ersten Hakenelements bzw. die zweite Auflauffläche des zweiten Hakenelements auf.

Beim Schließvorgang wird das Anschlagelement gegen die zweite Auflauffläche des zweiten Hakenelements gedrückt, so dass das zweite Hakenelement gegen die Kraft der zweiten Feder ausgelenkt wird. Durch das Verschieben des Anschlagelements entlang der zweiten Auflauffläche wird das zweite Hakenelement in die inaktive Stellung gebracht, in welcher das zweite Hakenelement durch das erste Blockierelement des ersten Hakenelements gehalten werden kann. Zudem wird das erste Hakenelement von dem zweiten Blockierelement des zweiten Hakenelements freigegeben, so dass das erste Hakenelement durch die erste Feder in die Rastposition überführt wird. Die Bewegungen des ersten und zweiten Hakenelements sind so aufeinander abgestimmt, dass das Anschlagelement die erste Auflauffläche des ersten Hakenelements bereits passiert hat, wenn das erste Hakenelement in die Rastposition überführt wird. Nach der Entrastung zu Beginn des Schließvorgangs liegt das erste Hakenelement in der Rastposition, das zweite Hakenelement in der inaktiven Position vor.

Darüber hinaus ist es günstig, wenn die zweite Federkraft der zweiten Feder der Hakeneinrichtung geringer als die erste Federkraft der ersten Feder der Hakeneinrichtung ist. Die erste oder zweite Federkraft kann durch die Stärke der ersten bzw. zweiten Feder und/oder durch die Position und Orientierung relativ zum ersten bzw. zweiten Hakenelement eingestellt werden.

Wie im Stand der Technik an sich bekannt, kann zwischen dem oberen Gepäckfachelement und dem unteren Gepäckfachelement eine Hebefeder zur Unterstützung der Bewegung des unteren Gepäckfachelements aus der Offenstellung in die Schließstellung vorgesehen sein. Vorzugsweise ist die Hebefeder auf der einen Seite mit dem Seitenpaneel des feststehenden oberen Gepäckfachelements und auf der anderen Seite mit der Seitenwand des beweglichen unteren Gepäckfachelements verbunden. Bevorzugt ist je eine Hebefeder an gegenüberliegenden Seiten des Gepäckfaches vorgesehen. Besonders bevorzugt ist es, wenn die Wirkung der Hebefeder in der Offenstellung größer als die entgegengesetzte Wirkung der Schwerkraft aufgrund des Eigengewichts des unteren Gepäckfachelements in dessen unbeladenen Zustand ist.

Gemäß einer besonders bevorzugten Ausführung des Gepäckfaches ist das untere Gepäckfachelement über ein Gelenk verschwenkbar an dem oberen Gepäckfachelement angeordnet. Dadurch wird eine Verschwenkung des unteren Gepäckfachelements zwischen der Offenstellung, in welcher eine Ladeöffnung zur Beladung des Gepäckfaches mit Gepäckstücken freigegeben ist, und einer Schließstellung, in welcher die Ladeöffnung verschlossen ist, um eine in Längsrichtung des Gepäckfaches, d.h. in Flugrichtung, verlaufende, beim Öffnungs- bzw. Schließvorgang im Wesentlichen ortsfeste Schwenkachse ermöglicht. Die zuvor beschriebene zweite Halteeinrichtung kann jedoch auch bei anderen Ausführungen von Überkopf-Gepäckfächern für Flugzeuge verwendet werden. Beispielsweise kann die zweite Halteeinrichtung bei einem Überkopf-Gepäckfach mit absenkbarem unteren Gepäckfachelement vorgesehen sein, bei welcher das untere Gepäckfachelement nicht um eine ortsfeste Schwenkachse verschwenkt, sondern von der oberen Schließ- in die untere Offenstellung und umgekehrt verlagerbar ist.

Die Erfindung wird nachstehend anhand eines bevorzugten Ausführungsbeispiels, auf das sie jedoch nicht beschränkt sein soll, weiter erläutert. In der Zeichnung zeigt:
Fig. 1 eine Seitenansicht eines erfindungsgemäßen Überkopf-Gepäckablagebehälters in einer Schließstellung, in welcher eine erste Halteeinrichtung zwischen einem unteren Gepäckfachelement und einem oberen Gepäckfachelement wirksam ist;
Fig. 2 eine Seitenansicht eines erfindungsgemäßen Überkopf-Gepäckablagebehälters in einer Offenstellung, in welcher eine zweite Halteeinrichtung zwischen dem unteren Gepäckfachelement und dem oberen Gepäckfachelement wirksam ist;
Fig. 3 eine Seitenansicht der ersten und zweiten Halteeinrichtung, welche über eine Kraftübertragungseinrichtung mit einem Griffelement verbunden sind;
Fig. 4 eine schaubildliche Ansicht der ersten und zweiten Halteeinrichtung, der Kraftübertragungseinrichtung und des Griffelements gemäß Fig. 3, wobei ein am oberen Gepäckfachelement angeordnetes Anschlagelement und eine am unteren Gepäckfachelement angeordnete Hakeneinrichtung der zweiten Halteeinrichtung im verrasteten Zustand dargestellt sind;
Fig. 5 eine Ansicht entsprechend Fig. 4, wobei die zweite Halteeinrichtung mittels der Kraftübertragungseinrichtung in eine Auslöseposition gebracht wurde, welche für die Einleitung des Schließvorgangs eingerichtet ist;
Fig. 6a eine Ansicht der zweiten Halteeinrichtung in der Halteposition;
Fig. 6b eine Ansicht der zweiten Halteeinrichtung in der Auslöseposition;
Fig. 6c eine Ansicht der zweiten Halteeinrichtung beim Verschwenken des unteren Gepäckfachelementes von der Offenstellung in Richtung der Schließstellung; und
Fig. 7a bis 7c Detailansichten der Hakeneinrichtung des erfindungsgemäßen Überkopf-Gepäckablagebehälters.

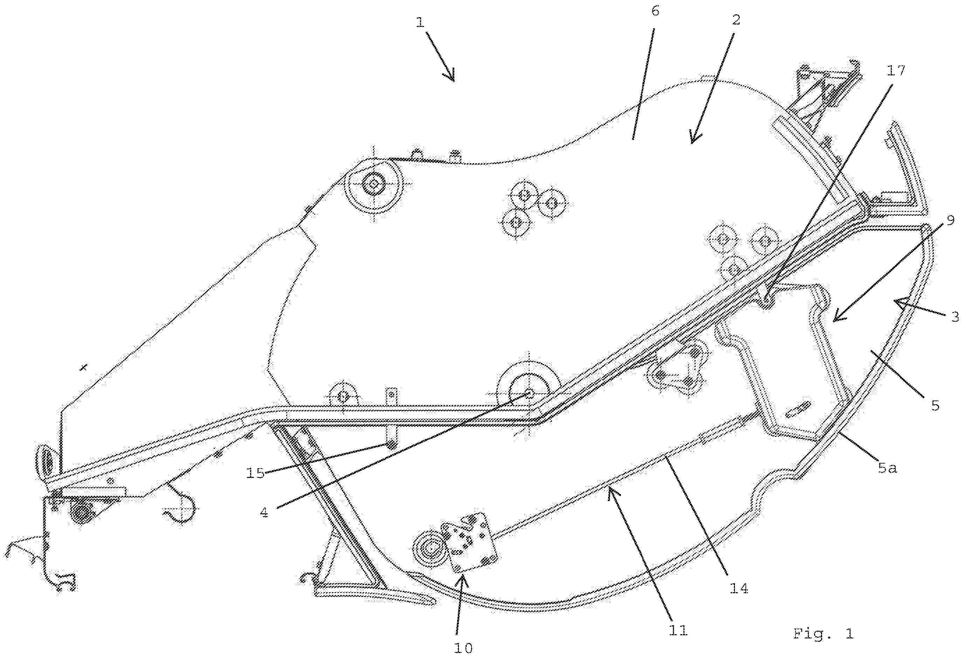

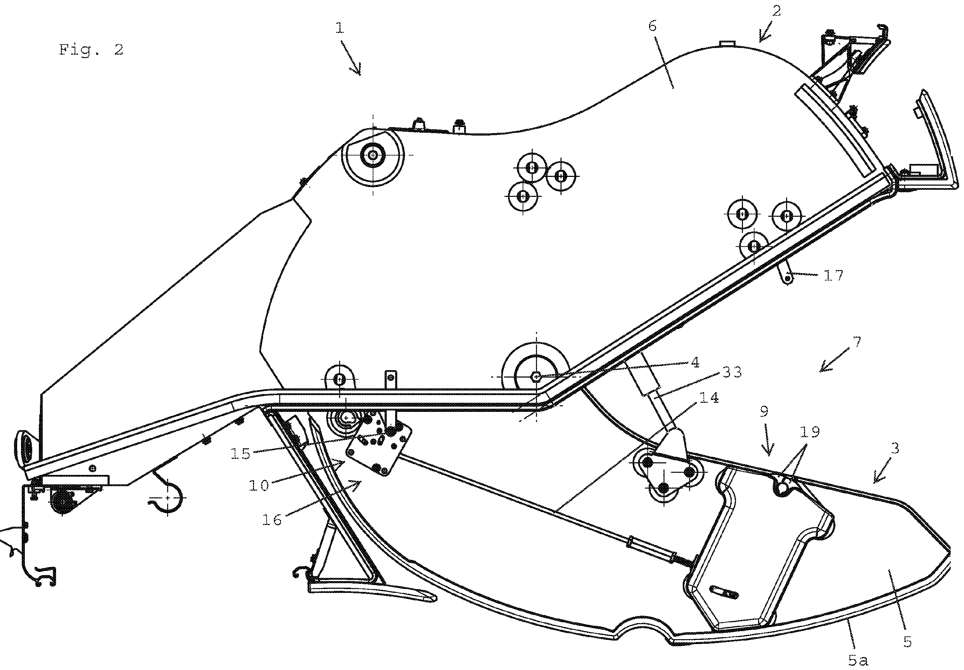

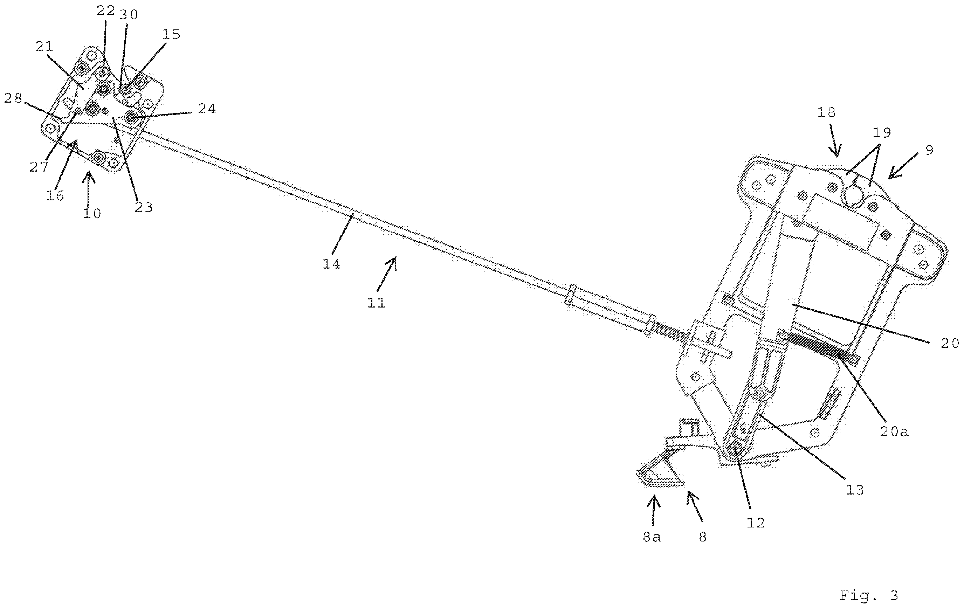

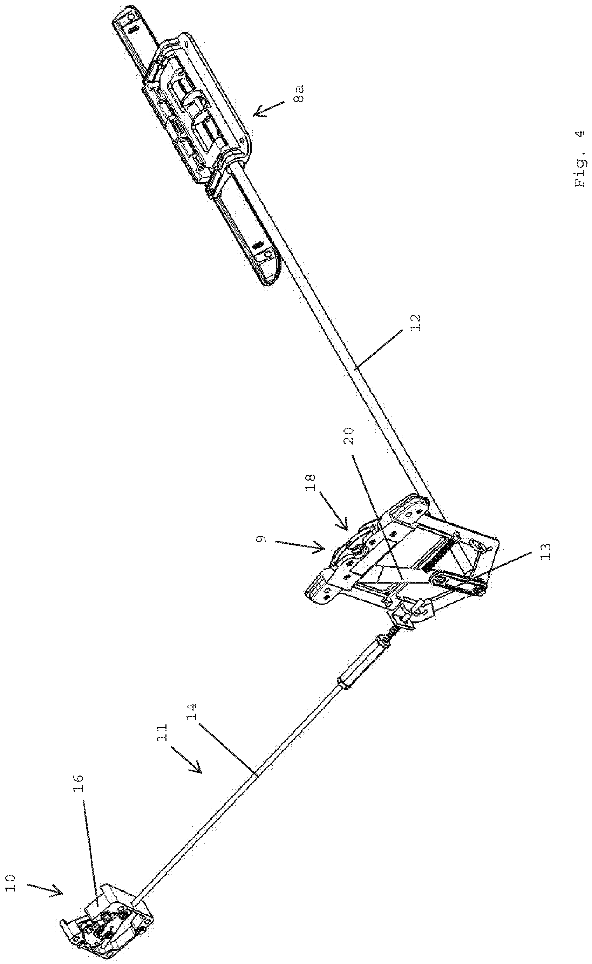

In Fig. 1 ist ein Überkopf-Gepäckfach 1 für Flugzeuge gezeigt. Das Überkopf-Gepäckfach weist ein feststehendes oberes Gepäckfachelement 2 auf, welches an einem Strukturelement, insbesondere an einem Flugzeugrumpf (nicht gezeigt), befestigbar ist. Darüber hinaus weist das Gepäckfach 1 ein bewegliches unteres Gepäckfachelement 3 auf. Das Gepäckfach 1 weist eine Längserstreckung auf, welche im eingebauten Zustand in Flugrichtung angeordnet ist. Das bewegliche Gepäckfachelement 3 ist beidseitig über Gelenke 4 mit Gelenkachsen an dem feststehenden Gepäckfachelement 2 aufgehängt. Die Gelenke 4 befinden sich an überlappenden Abschnitten von Seitenwänden 5 des unteren Gepäckfachelements 3 und Seitenpaneelen 6 des oberen Gepäckfachelements 2. Die Seitenwände 5 des unteren Gepäckfachelements 3 und die Seitenpaneele 6 des oberen Gepäckfachelements 2 sind jeweils im Wesentlichen eben bzw. plan ausgebildet, wobei die Seitenwände 5 des unteren Gepäckfachelements 3 im Wesentlichen parallel zu den Seitenpaneelen 6 des oberen Gepäckfachelements 2 angeordnet sind. Die Seitenwände 5 des unteren Gepäckfachelements 3 stehen seitlich von einem Boden 5a hoch, so dass das untere Gepäckfachelement 3 zur Aufnahme von Gepäckstücken als Mulde, Halbschütte bzw. U-förmiges Gepäckfach ausgebildet ist. Das untere Gepäckfachelement 3 ist zwischen einer Offenstellung (vgl. Fig. 2), in welcher eine Ladeöffnung 7 freigegeben ist, und einer Schließstellung (vgl. Fig. 1), in welcher die Ladeöffnung 7 verschlossen ist, verschwenkbar. Zu diesem Zweck weist das untere Gepäckfachelement 3 an der Vorder- bzw. Sichtseite ein Bedienelement 8 (vgl. Fig. 3, 4) auf, dessen Funktion nachstehend näher erläutert wird. Zwischen dem oberen Gepäckfachelement 2 und unteren Gepäckfachelement 3 ist eine Hebefeder 33 vorgesehen, mit welcher der Schließvorgang unterstützt wird. Die Hebefeder 33 ist bevorzugt mit einem Dämpfungselement kombiniert, so dass die Bewegung des unteren Gepäckfachelementes 3 gedämpft wird.

Wie aus Fig. 1, 2 weiters ersichtlich, weist das Gepäckfach 1 eine erste Halteeinrichtung 9 zum Halten des unteren Gepäckfachelements 3 in dessen Schließstellung und eine zweite Halteeinrichtung 10 zum Halten des unteren Gepäckfachelements 3 in dessen Offenstellung auf. Zur Betätigung der ersten Halteeinrichtung 9 und der zweiten Halteeinrichtung 10 ist das Bedienelement 8 vorgesehen. Demnach kann sowohl die erste Halteeinrichtung 9 als auch die zweite Halteeinrichtung 10 über ein- und dasselbe Bedienelement 8 betätigt werden. Zu diesem Zweck ist das Bedienelement 8 zur Betätigung einer Kraftübertragungseinrichtung 11 eingerichtet, welche mit der ersten Halteeinrichtung 9 verbunden ist. Darüber hinaus ist das Bedienelement 9 zur Kraftübertragung auf die zweite Halteeinrichtung 10 eingerichtet. In der Schließstellung des Gepäckfaches 1 kann das Bedienelement 8 manuell betätigt werden, um die erste Halteeinrichtung 9 von einer Haltestellung, in welcher das untere Gepäckfachelement 3 selbständig in der Schließstellung gehalten ist, in eine Freigabestellung, in welcher das untere Gepäckfachelement 3 in die Offenstellung verschwenkt werden kann, zu überführen. In der Offenstellung des Gepäckfaches 1 kann das Bedienelement 8 betätigt werden, um die zweite Halteeinrichtung 10 aus einer Halteposition in eine Auslöseposition zu bringen. In der Halteposition ist die zweite Halteeinrichtung 10 dazu eingerichtet, das untere Gepäckfachelement 3 gegen die Wirkung der Hebefeder 33 selbständig in der Offenstellung zu halten. In der Auslöseposition der zweiten Halteeinrichtung 10 kann das untere Gepäckfachelement 3 unter Aufbringung einer vergleichsweise geringen Bedienkraft in die Offenstellung verschwenkt werden.

Wie aus Fig. 2, 3 ersichtlich, ist als Bedienelement 8 ein Schwenkgriff 8a vorgesehen, der zur Betätigung der ersten Halteeinrichtung 9 bzw. der zweite Halteeinrichtung 10 verschwenkbar ist.

Die Kraftübertragungseinrichtung 11 weist eine drehfest mit dem Schwenkgriff 8a gekoppelte Drehwelle 12 auf, welche von dem Schwenkgriff 8a in Längsrichtung des Gepäckfaches 1 zur Seitenwand 5 des unteren Gepäckfachelements 3 führt. Die Drehwelle 12 ist drehfest mit einem Betätigungshebel 13 verbunden, mit welchem einerseits die erste Halteeinrichtung 9 und andererseits die zweite Halteeinrichtung 10 betätigt wird. Die Kraftübertragungseinrichtung 11 weist ein in dessen Längsrichtung verschiebliches Linearelement 14 auf, welches in der gezeigten Ausführung durch eine Schubstange gebildet ist. Das Linearelement 14 ist am einen Ende mit der zweiten Halteeinrichtung 10 verbunden. Das andere Ende des Linearelements 14 wird durch den Betätigungshebel 13 betätigt. Somit kann die Verschwenkung des Schwenkgriffs 8a zunächst in eine Drehung der Drehwelle 12 und danach in eine Verschiebung des Linearelements 14 umgewandelt werden. Im unverschwenkten Zustand des Schwenkgriffs 8a ist der Betätigungshebel 13 in einem Abstand zum anderen Ende des Linearelements 14 angeordnet. Durch Verschwenkung des Schwenkgriffs 8a und damit des Betätigungshebels 13 um einen Schwenkwinkel von mehr als 10° wird der Betätigungshebel 13 in einer Anschlagstellung an dem Linearelement 14 gebracht, so dass das Linearelement 14 bei einer fortgesetzten Verschwenkung des Schwenkgriffs 8a verschoben wird. Vorzugsweise ist der Schwenkgriff 8a mittels einer Feder in Richtung der unverschwenkten Stellung vorgespannt.

Wie aus Fig. 1 bis 5 weiters ersichtlich, weist die zweite Halteeinrichtung 10 ein Anschlagelement 15 auf, welches unbeweglich am Seitenpaneel 6 des oberen Gepäckfachelements 2 angeordnet ist. Als Anschlagelement 15 ist in der gezeigten Ausführung ein Schlagstift vorgesehen. Darüber hinaus weist die zweite Halteeinrichtung 10 eine Hakeneinrichtung 16 auf. In der Offenstellung des unteren Gepäckfachelements 3 ist das Anschlagelement 15 mit der Hakeneinrichtung 16 verrastet.

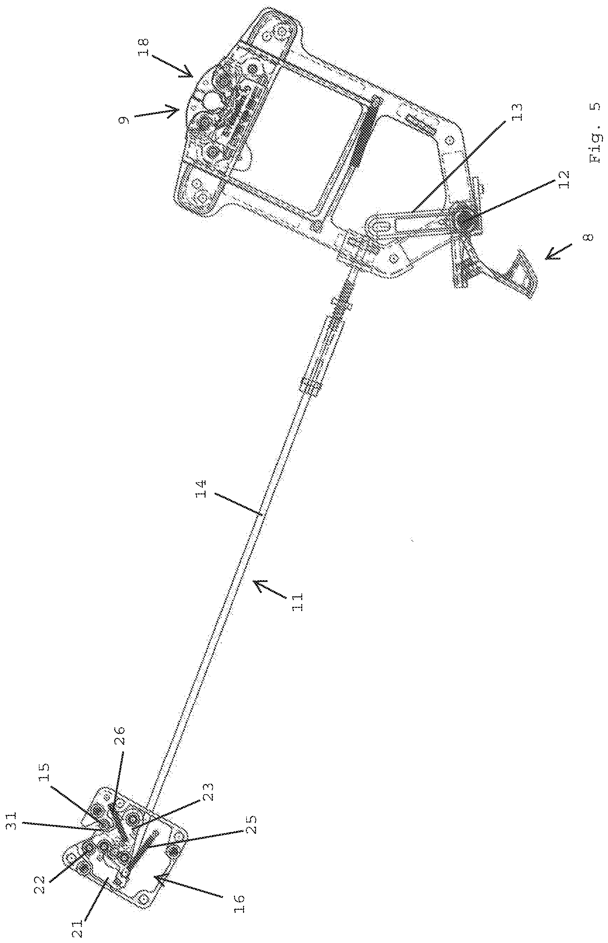

Wie aus Fig. 1 bis 5 weiters ersichtlich, weist die erste Halteeinrichtung 9 ein weiteres Anschlagelement 17 auf, welches unbeweglich an der Unterseite des Seitenpaneels 6 des oberen Gepäckfachelements 2 angeordnet ist. Als weiteres Anschlagelement 17 ist ein weiterer Schlagstift vorgesehen. Die erste Halteeinrichtung 9 weist zudem eine weitere Hakeneinrichtung 18 mit zwei kooperierenden Haken 19 auf, welche in der Schließstellung mit dem weiteren Anschlagelement 17 verrastet werden. Die weitere Hakeneinrichtung 18 ist über einen (in Fig. 5 nicht gezeigten) Umlenkhebel 20 mit dem Betätigungshebel 13 verbunden, welcher durch Betätigung des Schwenkgriffs 8a verschwenkt wird. Die Verschwenkung des Betätigungshebels 13 wird in eine gegenläufige Verschwenkung des Umlenkhebels 20 gegen die Kraft einer Feder 20a umgesetzt, wodurch das weitere Anschlagelement 17 von den Haken 19 freigegeben werden kann.

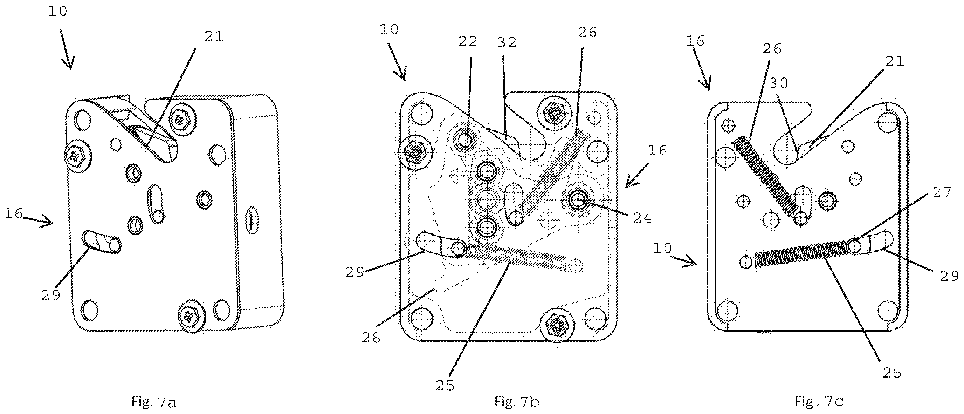

Wie aus Fig. 1 bis 7c weiters ersichtlich, weist die Hakeneinrichtung 16 der zweiten Halteeinrichtung 10 ein erstes Hakenelement 21 auf, welches um eine erste Schwenkachse 22 verschwenkbar ist. Darüber hinaus weist die zweite Halteeinrichtung 10 ein zweites Hakenelement 23 auf, welches um eine zweite Schwenkachse 24 verschwenkbar ist. Das erste Hakenelement 21 ist mit einer ersten Feder 25, insbesondere Schraubenfeder, verbunden (vgl. Fig. 5 bis 7c). Durch Betätigung des Schwenkgriffs 8a in der Offenstellung des unteren Gepäckfachelementes 3 ist das erste Hakenelement 21 gegen eine erste Federkraft der ersten Feder 25 von einer mit dem Anschlagelement 15 verrasteten Rastposition (vgl. Fig. 3) in eine das Anschlagelement 15 freigebende Freigabeposition (vgl. Fig. 5) verschwenkbar. Das zweite Hakenelement 23 ist in der Rastposition des ersten Hakenelements 21 in einer das Anschlagelement 15 freigebenden inaktiven Stellung und in der Freigabeposition des ersten Hakenelements 21 in einer mit dem Anschlagelement 15 verrasteten aktiven Stellung angeordnet. Das zweite Hakenelement 23 ist derart mit einer zweiten Feder 26 (vgl. Fig. 5 bis 7c), insbesondere Schraubenfeder, verbunden, dass das zweite Hakenelement 23 durch eine zweite Federkraft der zweiten Feder 26 in Richtung der aktiven Stellung vorgespannt ist.

Wie aus Fig. 3 bis 7c weiters ersichtlich, weist das erste Hakenelement 21 ein erstes Blockierelement 27 auf, mit welchem das zweite Hakenelement 23 in der Rastposition des ersten Hakenelements 21 in der inaktiven Stellung gehalten ist. Entsprechend weist das zweite Hakenelement 23 ein zweites Blockierelement 28 auf, mit welchem das erste Hakenelement 21 in der aktiven Stellung des zweiten Hakenelements 23 in der Freigabeposition gehalten ist. Als erstes Blockierelement 27 des ersten Hakenelements 21 ist ein mit der Kraftübertragungseinrichtung 11 verbundener Führungsstift vorgesehen, welcher zwischen der Rastposition und der Freigabeposition in einer Langlochführung 29 der Hakeneinrichtung verschieblich ist. Als zweites Blockierelement 28 weist das zweite Hakenelements 23 eine Haltenase auf, welche in der Freigabeposition des ersten Hakenelements 21 mit dem ersten Blockierelement 27 des ersten Hakenelements 21 in Eingriff steht.

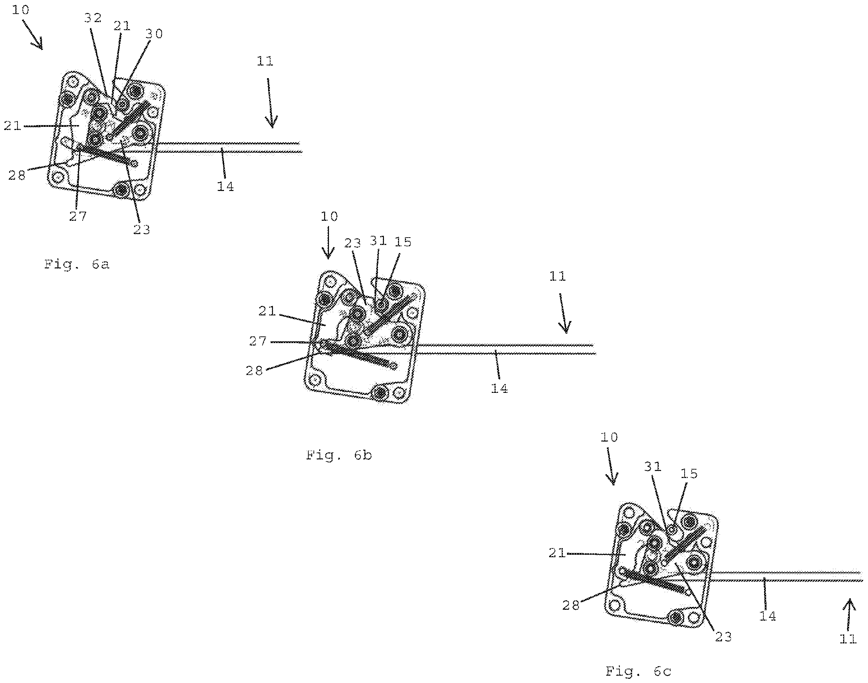

Wie insbesondere aus Fig. 3, 5, 6a bis 6c ersichtlich, weist das erste Hakenelement 21 eine erste Auflauffläche 30 und das zweite Hakenelement 23 eine zweite Auflauffläche 31 (vgl. Fig. 5) für das Anschlagelement 15 auf. In der Offenstellung des unteren Gepäckfachelementes 3 liegt das Anschlagelement 15 an der ersten Auflauffläche 30 an, solange die zweite Halteeinrichtung 10 in der Halteposition angeordnet ist (vgl. Fig. 6a). Durch Betätigung des Bedienelementes 8 wird die zweite Halteeinrichtung 10 in die Auslöseposition gebracht, wobei das Anschlagelement 15 an der zweiten Auflauffläche 31 des zweiten Hakenelements 23 angelegt wird (vgl. Fig. 6b). Das zweite Hakenelement 23 bewirkt eine zweite Haltekraft, welche geringer als die erste Haltekraft aufgrund des ersten Hakenelements 21 ist. Zu diesem Zweck weist die zweite Auflauffläche 31 einen flacheren Auflaufwinkel als die erste Auflauffläche 30 auf. Darüber hinaus ist die zweite Federkraft der zweiten Feder 26 der Hakeneinrichtung 16 geringer als die erste Federkraft der ersten Feder 25 der Hakeneinrichtung 16. Beim Verschwenken des unteren Gepäckfachelementes 3 in Richtung der Schließstellung wird das Anschlagelement 15 über die zweite Auflauffläche 31 des zweiten Hakenelements 23 geführt (vgl. Fig. 6c), welches dadurch in die inaktive Stellung verschwenkt wird. Hiermit wird die Verschwenkung des ersten Hakenelements 21 freigegeben. Das erste Hakenelement 21 wird jedoch erst in die Rastposition verschwenkt, wenn das Anschlagelement 15 das erste Hakenelement 21 passiert hat.

Aus Fig. 6a bis 6c ist weiters ersichtlich, dass das erste Hakenelement 21 eine weitere Auflauffläche 32 für das Anschlagelement 15 auf weist. Die weitere Auflauffläche 32 ist bei der Bewegung des Gepäckfaches 1 von der Schließstellung in die Offenstellung wirksam. Kurz vor Erreichen der Offenstellung des Gepäckfaches 1 trifft das Anschlagelement 15 auf die weitere Auflauffläche 32, wobei das erste Hakenelement 21 gegen die Kraft der ersten Feder 15 geringfügig verschwenkt und nach Passieren des Anschlagelementes 15 in die Rastposition zurückgeführt wird. Dadurch wird das Anschlagelement 15 mit dem ersten Hakenelement 21 verrastet, so dass die zweite Halteeinrichtung 10 in der Halteposition vorliegt.

## Patentansprüche

1. Überkopf-Gepäckfach (1) für ein Flugzeug, mit einem oberen Gepäckfachelement (2), mit einem unteren Gepäckfachelement (3), welches zwischen einer Offen- und einer Schließstellung beweglich ist, mit einer ersten Halteeinrichtung (9) zum Halten des unteren Gepäckfachelements (3) in dessen Schließstellung und mit einer zweiten Halteeinrichtung (10) zum Halten des unteren Gepäckfachelements (3) in dessen Offenstellung, **dadurch gekennzeichnet, dass** ein Bedienelement (8) vorgesehen ist, welches über eine Kraftübertragungseinrichtung (11) mit der zweiten Halteeinrichtung (10) zum Halten des unteren Gepäckfachelements (3) in dessen Offenstellung verbunden ist, wobei die zweite Halteeinrichtung (10) mittels des Bedienelements (8) von einer Halteposition in eine Auslöseposition überführbar ist, wobei die zweite Halteeinrichtung (10) unabhängig von der Bewegung des unteren Gepäckfachelementes (3) in die Auslöseposition überführbar ist.

2. Überkopf-Gepäckfach (1) nach Anspruch 1, **dadurch gekennzeichnet, dass** das Bedienelement (8) weiters zur Überführung der ersten Halteeinrichtung (9) von einer das untere Gepäckfachelement (3) in der Schließstellung fixierenden Haltestellung in eine das untere Gepäckfachelement (3) freigebende Freigabestellung eingerichtet ist.

3. Überkopf-Gepäckfach (1) nach Anspruch 1 oder 2, **dadurch gekennzeichnet, dass** als Bedienelement (8) ein Griffelement, insbesondere ein Schwenkgriff (8a), vorgesehen ist, der über die Kraftübertragungseinrichtung (11) mit der zweiten Halteeinrichtung (10) verbunden ist.

4. Überkopf-Gepäckfach (1) nach Anspruch 3, **dadurch gekennzeichnet, dass** die Kraftübertragungseinrichtung (11) eine mit dem Schwenkgriff (8a) verbundene Drehwelle (12) und/oder ein mit der zweiten Halteeinrichtung (10) verbundenes Linearelement (14), insbesondere eine Schubstange, aufweist, wobei die Kraftübertragungseinrichtung (11) vorzugsweise einen mit der Drehwelle (12) verbundenen Betätigungshebel (13) aufweist, wobei der Betätigungshebel (13), insbesondere ab einem Schwenkwinkel von mehr als 5°, vorzugsweise mehr als 10°, in einer Anschlagstellung an dem Linearelement (14) angeordnet ist.

5. Überkopf-Gepäckfach (1) nach einem der Ansprüche 1 bis 4, **dadurch gekennzeichnet, dass** die zweite Halteeinrichtung (10) ein Anschlagelement (15), insbesondere einen Schlagstift, und eine Hakeneinrichtung (16) aufweist, wobei das Anschlagelement (15) in der Offenstellung des unteren Gepäckfachelements (3) mit der Hakeneinrichtung (16) verrastet ist, wobei das Anschlagelement (15) vorzugsweise an einem Seitenpaneel (6) des oberen Gepäckfachelements (2) und die Hakeneinrichtung (16) an einer Seitenwand (5) des unteren Gepäckfachelements (3) angeordnet ist oder wobei das Anschlagelement (15) an der Seitenwand (5) des unteren Gepäckfachelements (3) und die Hakeneinrichtung (16) an dem Seitenpaneel (5) des oberen Gepäckfachelements (2) angeordnet ist.

6. Überkopf-Gepäckfach (1) nach Anspruch 5, **dadurch gekennzeichnet, dass** die Hakeneinrichtung (16) ein erstes Hakenelement (21) und eine erste Feder (25) aufweist, wobei das erste Hakenelement (21) mittels der Kraftübertragungseinrichtung (11) gegen eine erste Federkraft der ersten Feder (25) von einer mit dem Anschlagelement (15) verrasteten Rastposition in eine das Anschlagelement (15) freigebende Freigabeposition beweglich, insbesondere verschwenkbar, ist.

7. Überkopf-Gepäckfach (1) nach Anspruch 6, **dadurch gekennzeichnet, dass** die Hakeneinrichtung (16) ein zweites Hakenelement (12) aufweist, welches in der Rastposition des ersten Hakenelements (21) in einer das Anschlagelement (15) freigebenden inaktiven Stellung und in der Freigabeposition des ersten Hakenelements (21) in einer mit dem Anschlagelement (15) verrasteten aktiven Stellung angeordnet ist, wobei das zweite Hakenelement (23) vorzugsweise mit einer zweiten Feder (26) verbunden ist, wobei das zweite Hakenelement (23) durch eine zweite Federkraft der zweiten Feder (26) in Richtung der aktiven Stellung vorgespannt ist.

8. Überkopf-Gepäckfach (1) nach Anspruch 7, **dadurch gekennzeichnet, dass** das erste Hakenelement (21) ein erstes Blockierelement (27) aufweist, mit welchem das zweite Hakenelement (23) in der Rastposition des ersten Hakenelements (21) in der inaktiven Stellung gehalten ist.

9. Überkopf-Gepäckfach (1) nach einem der Ansprüche 7 bis 8, **dadurch gekennzeichnet, dass** das zweite Hakenelement (23) ein zweites Blockierelement (28) aufweist, mit welchem das erste Hakenelement (21) in der aktiven Stellung des zweiten Hakenelements (23) in der Freigabeposition gehalten ist.

10. Überkopf-Gepäckfach (1) nach einem der Ansprüche 7 bis 9, **dadurch gekennzeichnet, dass** als erstes Blockierelement (27) des ersten Hakenelements ein mit der Kraftübertragungseinrichtung (11) verbundener Führungsstift vorgesehen ist, welcher zwischen der Rastposition und der Freigabeposition in einer Langlochführung (29) der Hakeneinrichtung (16) verschieblich ist.

11. Überkopf-Gepäckfach (1) nach einem der Ansprüche 7 bis 10, **dadurch gekennzeichnet, dass** als zweites Blockierelement (28) des zweiten Hakenelements (23) eine Haltenase vorgesehen ist, welche in der Freigabeposition des ersten Hakenelements (21) mit dem ersten Blockierelement (27) des ersten Hakenelements (21) in Eingriff steht.

12. Überkopf-Gepäckfach (1) nach einem der Ansprüche 7 bis 11, **dadurch gekennzeichnet, dass** das erste Hakenelement (21) eine erste Auflauffläche (30) und das zweite Hakenelement (23) eine zweite Auflauffläche (31) für das Anschlagelement (15) in der Offenstellung des unteren Gepäckfachelementes (3) aufweist, wobei die zweite Auflauffläche (31) einen flacheren Auflaufwinkel als die erste Auflauffläche (30) aufweist.

13. Überkopf-Gepäckfach (1) nach einem der Ansprüche 7 bis 12, **dadurch gekennzeichnet, dass** die zweite Federkraft der zweiten Feder (26) der Hakeneinrichtung (16) geringer als die erste Federkraft der ersten Feder (26) der Hakeneinrichtung (16) ist.

14. Überkopf-Gepäckfach (1) nach einem der Ansprüche 1 bis 13, **dadurch gekennzeichnet, dass** zwischen dem oberen Gepäckfachelement (2) und dem unteren Gepäckfachelement (3) eine Hebefeder (33) zur Unterstützung der Bewegung des unteren Gepäckfachelements (3) aus der Offenstellung in die Schließstellung vorgesehen ist.

15. Überkopf-Gepäckfach (1) nach einem der Ansprüche 1 bis 14, **dadurch gekennzeichnet, dass** das untere Gepäckfachelement (3) über ein Gelenk (4) verschwenkbar an dem oberen Gepäckfachelement (2) angeordnet ist.

## Claims

1. Overhead luggage compartment (1) for an aircraft, comprising an upper luggage compartment element (2), a lower luggage compartment element (3) which is movable between an open and a closed position, a first holding device (9) for holding the lower luggage compartment element (3) in its closed position and a second holding device (10) for holding the lower luggage compartment element (3) in its open position, **characterised in that** an operating element (8) is provided which is connected to the second holding device (10) by means of a force transmission device (11) in order to hold the lower luggage compartment element (3) in its open position, it being possible for the second holding device (10) to be transferred from a holding position into a release position by means of the operating element (8) and it being possible for the second holding device (10) to be transferred into the release position independently of the movement of the lower luggage compartment element (3).

2. Overhead luggage compartment (1) according to claim 1, **characterised in that** the operating element (8) is further designed to transfer the first holding device (9) from a holding position that secures the lower luggage compartment element (3) in the closed position into a release position that releases the lower luggage compartment element (3).

3. Overhead luggage compartment (1) according to either claim 1 or claim 2, **characterised in that** a handle element, in particular a pivoting handle (8a), is provided as the operating element (8), which handle is connected to the second holding device (10) by means of the force transmission device (11).

4. Overhead luggage compartment (1) according to claim 3, **characterised in that** the force transmission device (11) has a rotating shaft (12) connected to the pivoting handle (8a) and/or a linear element (14), in particular a push rod, connected to the second holding device (10), the force transmission device (11) preferably having an actuating lever (13) connected to the rotating shaft (12), the actuating lever (13) being arranged in a stop position on the linear element (14), in particular from a pivoting angle of more than 5°, preferably more than 10°.

5. Overhead luggage compartment (1) according to any of claims 1 to 4, **characterised in that** the second holding device (10) has a stop element (15), in particular a striker pin, and a hook means (16), the stop element (15) being latched in the open position of the lower luggage compartment element (3) by the hook means (16), the stop element (15) preferably being arranged on a side panel (6) of the upper luggage compartment element (2) and the hook means (16) being arranged on a side wall (5) of the lower luggage compartment element (3) or the stop element (15) being arranged on the side wall (5) of the lower luggage compartment element (3) and the hook means (16) being arranged on the side panel (5) of the upper luggage compartment element (2).

6. Overhead luggage compartment (1) according to claim 5, **characterised in that** the hook means (16) has a first hook element (21) and a first spring (25), it being possible for the first hook element (21), by means of the force transmission device (11), to move, in particular pivot, against a first spring force of the first spring (25) from a locking position latched to the stop element (15) into a release position that releases the stop element (15).

7. Overhead luggage compartment (1) according to claim 6, **characterised in that** the hook means (16) has a second hook element (12) which, in the locking position of the first hook element (21), is arranged in an inactive position that releases the stop element (15) and which, in the release position of the first hook element (21), is arranged in an active position latched to the stop element (15), the second hook element (23) preferably being connected to a second spring (26), the second hook element (23) being preloaded in the direction of the active position by means of a second spring force of the second spring (26).

8. Overhead luggage compartment (1) according to claim 7, **characterised in that** the first hook element (21) has a first blocking element (27) by means of which the second hook element (23), in the locking position of the first hook element (21), is held in the inactive position.

9. Overhead luggage compartment (1) according to either claim 7 or claim 8, **characterised in that** the second hook element (23) has a second blocking element (28) by means of which the first hook element (21), in the active position of the second hook element (23), is held in the release position.

10. Overhead luggage compartment (1) according to any of claims 7 to 9, **characterised in that** a guide pin connected to the force transmission device (11) is provided as the first blocking element (27) of the first hook element, which pin can be moved between the locking position and the release position in a slot guide (29) of the hook means (16).

11. Overhead luggage compartment (1) according to any of claims 7 to 10, **characterised in that** a holding lug is provided as the second blocking element (28) of the second hook element (23), which lug, in the release position of the first hook element (21), is engaged with the first blocking element (27) of the first hook element (21).

12. Overhead luggage compartment (1) according to any of claims 7 to 11, **characterised in that** the first hook element (21) has a first run-up surface (30) and the second hook element (23) has a second run-up surface (31) for the stop element (15) in the open position of the lower luggage compartment element (3), the second run-up surface (31) having a shallower run-up angle than the first run-up surface (30).

13. Overhead luggage compartment (1) according to any of claims 7 to 12, **characterised in that** the second spring force of the second spring (26) of the hook means (16) is smaller than the first spring force of the first spring (26) of the hook means (16).

14. Overhead luggage compartment (1) according to any of claims 1 to 13, **characterised in that** a lifting spring (33) is provided between the upper luggage compartment element (2) and the lower luggage compartment element (3) for supporting the movement of the lower luggage compartment element (3) from the open position into the closed position.

15. Overhead luggage compartment (1) according to any of claims 1 to 14, **characterised in that** the lower luggage compartment element (3) is pivotally mounted on the upper luggage compartment element (2) by means of a joint (4).

## Revendications

1. Compartiment à bagages en hauteur (1) pour un avion, avec un élément de compartiment à bagages supérieur (2), avec un élément de compartiment à bagages inférieur (3), qui est mobile entre une position d'ouverture et une position de fermeture, avec un premier dispositif de maintien (9) pour le maintien de l'élément de compartiment à bagages inférieur (3) dans sa position de fermeture et avec un deuxième dispositif de maintien (10) pour le maintien de l'élément de compartiment à bagages inférieur (3) dans sa position d'ouverture, **caractérisé en ce qu'**un élément de commande (8) est prévu, qui est relié, par l'intermédiaire d'un dispositif de transmission de forces (11), avec le deuxième dispositif de maintien (10) pour le maintien de l'élément de compartiment à bagages inférieur (3) dans sa position d'ouverture, le deuxième dispositif de maintien (10) pouvant être déplacé, au moyen de l'élément de commande (8), d'une position de maintien vers une position de déclenchement, le deuxième dispositif de maintien (10) pouvant être déplacé vers la position de déclenchement indépendamment du mouvement de l'élément de compartiment à bagages inférieur (3).

2. Compartiment à bagages en hauteur (1) selon la revendication 1, **caractérisé en ce que** l'élément de commande (8) est en outre conçu pour déplacer le premier dispositif de maintien (9) d'une position de maintien fixant l'élément de compartiment à bagages inférieur (3) dans la position de fermeture vers une position de déverrouillage libérant l'élément de compartiment à bagages inférieur (3).

3. Compartiment à bagages en hauteur (1) selon la revendication 1 ou 2, **caractérisé en ce que**, en tant qu'élément de commande (8), un élément de préhension, plus particulièrement une poignée pivotante (8a), est prévu, qui est relié par l'intermédiaire du dispositif de transmission de force (11), avec le deuxième dispositif de maintien (10).

4. Compartiment à bagages en hauteur (1) selon la revendication 3, **caractérisé en ce que** le dispositif de transmission de force (11) comprend un arbre rotatif (12) relié avec la poignée pivotante (8) et/ou un élément linéaire (14) relié avec le deuxième dispositif de maintien (10), plus particulièrement une tige de poussée, le dispositif de transmission de force (11) comprenant de préférence un levier d'actionnement (13) relié avec l'arbre rotatif (12), le levier d'actionnement (13), plus particulièrement à partir d'un angle de pivotement supérieur à 5°, de préférence supérieur à 10°, étant disposé dans une position de butée contre l'élément linéaire (14).

5. Compartiment à bagages en hauteur (1) selon l'une des revendications 1 à 4, **caractérisé en ce que** le deuxième dispositif de maintien (10) comprend un élément de butée (15), plus particulièrement un percuteur, et un dispositif à crochet (16), l'élément de butée (15) étant encliqueté, dans la position d'ouverture de l'élément de compartiment à bagages inférieur (3), avec le dispositif à crochet (16), l'élément de butée (15) étant disposé, de préférence, sur un panneau latéral (6) de l'élément de compartiment à bagages supérieur (2) et le dispositif à crochet (16) sur une paroi latérale (5) de l'élément de compartiment à bagages inférieur (3) ou l'élément de butée (15) étant disposé sur la paroi latérale (5) de l'élément de compartiment à bagages inférieur (3) et le dispositif à crochet (16) sur le panneau latéral (5) de l'élément de compartiment à bagages supérieur (2).

6. Compartiment à bagages en hauteur (1) selon la revendication 5, **caractérisé en ce que** le dispositif à crochet (16) comprend un premier élément à crochet (21) et un premier ressort (25), le premier élément à crochet (21) pouvant être déplacé, plus particulièrement pivoté, au moyen du dispositif de transmission de force (11), contre une première force de ressort du premier ressort (25), d'une position d'encliquetage encliquetée avec l'élément de butée (15) vers une position de déverrouillage libérant l'élément de butée (15).

7. Compartiment à bagages en hauteur (1) selon la revendication 6, **caractérisé en ce que** le dispositif à crochet (16) comprend un deuxième élément à crochet (12) qui est disposé, dans la position d'encliquetage du premier élément à crochet (21), dans une position inactive libérant l'élément de butée (15) et, dans la position de déverrouillage du premier élément à ressort (21), dans une position active encliquetée avec l'élément de butée (15), le deuxième élément à crochet (23) étant de préférence relié avec un deuxième ressort (26), le deuxième élément à crochet étant précontraint par une deuxième force de ressort du deuxième ressort (26) en direction de la position active.

8. Compartiment à bagages en hauteur (1) selon la revendication 7, **caractérisé en ce que** le premier élément à crochet (21) comprend un premier élément de blocage (27) avec lequel le deuxième élément à crochet (23) est maintenu, dans la position d'encliquetage du premier élément à crochet (21), dans la position inactive.

9. Compartiment à bagages en hauteur (1) selon l'une des revendications 7 à 8, **caractérisé en ce que** le deuxième élément à crochet (23) comprend un deuxième élément de blocage (28) avec lequel le premier élément à crochet (21) est maintenu, dans la position active du deuxième élément à crochet (23), dans la position de déverrouillage.

10. Compartiment à bagages en hauteur (1) selon l'une des revendications 7 à 9, **caractérisé en ce que**, en tant que premier élément de blocage (27) du premier élément à crochet, une goupille de guidage reliée avec le dispositif de transmission de force (11) est prévue, qui peut coulisser entre la position d'encliquetage et la position de déverrouillage dans un guidage à trou oblong (29) du dispositif à crochet (16).

11. Compartiment à bagages en hauteur (1) selon l'une des revendications 7 à 10, **caractérisé en ce que**, en tant que deuxième élément de blocage (28) du deuxième élément à crochet (23), est prévu un embout de maintien qui est emboîté, dans la position de déverrouillage du premier élément à crochet (21), avec le premier élément de blocage (27) du premier élément à crochet (21).

12. Compartiment à bagages en hauteur (1) selon l'une des revendications 7 à 11, **caractérisé en ce que** le premier élément à crochet (21) comprend une première surface de rampe (30) et le deuxième élément à crochet (23) comprend une deuxième surface de rampe (31) pour l'élément de butée (15) dans la position d'ouverture de l'élément de compartiment à bagages inférieur (3), la deuxième surface de rampe (31) présentant un angle de rampe plus plat que la première surface de rampe (30).

13. Compartiment à bagages en hauteur (1) selon l'une des revendications 7 à 12, **caractérisé en ce que** la deuxième force de ressort du deuxième ressort (26) du dispositif à crochet (16) est plus faible que la première force de ressort du premier ressort (26) du dispositif à crochet (16).

14. Compartiment à bagages en hauteur (1) selon l'une des revendications 1 à 13, **caractérisé en ce que**, entre l'élément de compartiment à bagages supérieur (2) et l'élément de compartiment à bagages inférieur (3), est prévu un ressort de levage (33) pour le soutien du mouvement de l'élément de compartiment à bagages inférieur (3) de la position d'ouverture vers la position de fermeture.

15. Compartiment à bagages en hauteur (1) selon l'une des revendications 1 à 14, **caractérisé en ce que**, entre l'élément de compartiment à bagages inférieur (3) est disposé de manière pivotante sur l'élément de compartiment à bagages supérieur (2) par l'intermédiaire d'une articulation (4).
